# EUROPEAN PATENT APPLICATION

(11) **EP 4 657 623 A1**
(43) Date of publication of application: **03.12.2025**
(21) Application number: 23918557.2
(22) Date of filing: 30.11.2023
(51) Int. Cl.: H01M 50/204, H01M 10/613, H01M 10/625, H01M 10/6551, H01M 50/209

(54) **METHOD FOR MANUFACTURING BATTERY PACK, AND BATTERY PACK**

(30) Priority: 25.01.2023 JP 2023009523
(71) Applicant: AESC Japan Ltd., Yokohama-Shi, Kanagawa 220-0012 (JP)
(72) Inventor: URANO, Yuki, Zama-shi, Kanagawa 252-0012 (JP); NAKAMURA, Yukiharu, Zama-shi, Kanagawa 252-0012 (JP); UNO, Masato, Zama-shi, Kanagawa 252-0012 (JP)
(74) Representative: Mathys & Squire
(86) International application number: PCT/JP2023/042860
(87) International publication number: WO 2024/157602

(57) **Abstract**

A method of manufacturing a battery pack (10) includes a step of applying an applied filler (150A) onto at least a portion of a housing body (200), and a step of mounting a battery module (100) on the at least a portion of the housing body (200) via the applied filler (150A). In the step of applying the applied filler (150A), the applied filler (150A) has a pattern including a plurality of folded portions arranged alternately.

## Description

### TECHNICAL FIELD

The present invention relates to a method of manufacturing a battery pack, and a battery pack.

### BACKGROUND ART

In recent years, various battery packs including a plurality of battery modules have been developed. In a battery module described in Patent Document 1, for example, the battery module is fixed to a housing body. In the battery module, a thermally conductive member is provided between the battery module and the housing body. The thermally conductive member is formed by application.

Patent document 2 describes a method of joining battery cells with each other with an adhesive. In the method, the adhesive is provided in a stripe pattern shape parallel to the longitudinal direction of the battery cell.

### RELATED DOCUMENT

### PATENT DOCUMENT

Patent Document 1: International Patent Publication No. WO2017/47211
Patent Document 2: Japanese Patent Application Publication No. 2006-172994

### DISCLOSURE OF THE INVENTION

### TECHNICAL PROBLEM

As described in Patent Document 1, for example, a filler such as a thermally conductive member may be provided between a battery module and a housing body by application. The applied filler spreads in the lateral direction due to the compression between the battery module and the housing body. Simply applying the filler, however, may cause air to become surrounded in some regions by the filler spread by the compression, leaving an uncovered region of the filler.

An example of the object of the present invention is to reduce the uncovered region of the filler. Other objects of the present invention will become apparent from the description of the present specification.

### SOLUTION TO PROBLEM

An aspect of the present invention is as follows.
[1] A method of manufacturing a battery pack including:
   a step of applying a filler onto at least a portion of a housing body; and
   a step of mounting a battery module on the at least a portion of the housing body via the filler, wherein,
   in the step of applying the filler, the filler has at least one of a pattern including a plurality of folded portions arranged alternately, and a plurality of patterns arranged in a predetermined direction and including adjacent patterns having displaced ends on at least one of opposite sides.
[2] A battery pack including:
   a housing body; and
   a battery module mounted on at least a portion of the housing body via a filler, wherein
   an area of a region of which an entire circumference is surrounded by the filler is less than 30% of an entire area of the filler.

### ADVANTAGEOUS EFFECTS OF INVENTION

According to the aspect described above of the present invention, the uncovered region of the filler can be reduced.

### BRIEF DESCRIPTION OF THE DRAWINGS

[Fig. 1] A perspective view of a battery pack according to an embodiment.
[Fig. 2] A plan view of the battery pack according to the embodiment with an upper case removed.
[Fig. 3] A plan view of a battery module according to the embodiment.
[Fig. 4] An A-A cross-sectional view of Fig. 3.
[Fig. 5] A plan view of a filler according to the embodiment.
[Fig. 6] A view for describing a first example of a method of forming a filler according to the embodiment.
[Fig. 7] A view for describing a second example of a method of forming a filler according to the embodiment.
[Fig. 8] A view for describing a third example of a method of forming a filler according to the embodiment.
[Fig. 9] A plan view of a filler according to a variant.
[Fig. 10] A view for describing one example of a method of forming a filler according to the variant.
[Fig. 11] A plan view of a filler according to a comparative example.
[Fig. 12] A view for describing one example of a method of forming a filler according to the comparative example.

### DESCRIPTION OF EMBODIMENTS

Hereinafter, an embodiment and a variant of the present invention are described by using the drawings. In all of the drawings, a similar component is assigned with a similar reference sign, and description thereof is omitted as appropriate.

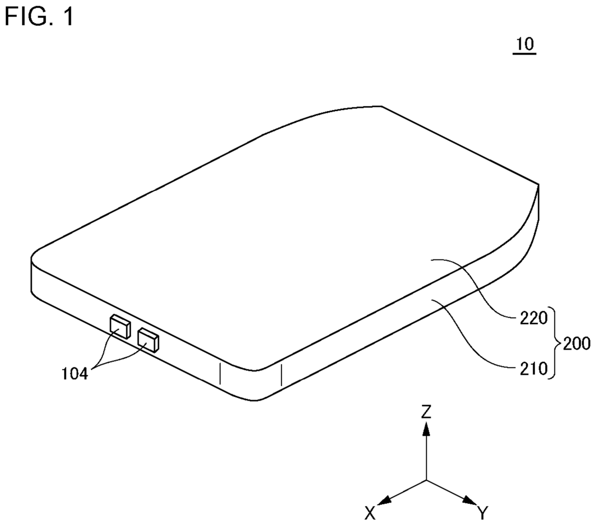

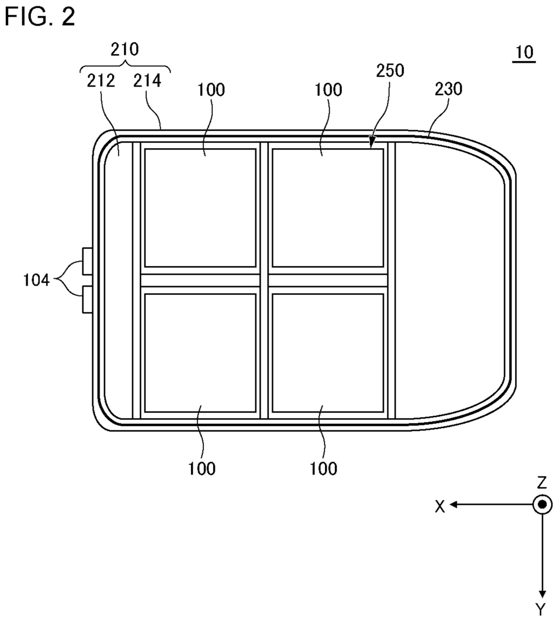

Fig. 1 is a perspective view of a battery pack 10 according to an embodiment. Fig. 2 is a plan view of the battery pack 10 according to the embodiment with an upper case 220 removed.

In the embodiment, the battery pack 10 is mounted on an automobile. Specifically, the battery pack 10 is mounted between the front wheel and the rear wheel of the automobile. Unless otherwise specified, the battery pack 10 is described as being mounted on the automobile. The battery pack 10, however, is also applicable to the use other than an automobile.

In each figure, the X direction, the Y direction, and the Z direction are illustrated for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an upward-downward direction of the battery pack 10. The arrow pointing in the X direction, and arrows pointing in the Y direction and pointing in the Z direction indicate a front direction, a left direction, and an upward direction of the battery pack 10, respectively. In Fig. 2, the white circle with the black dot indicating the Z direction indicates that the arrow pointing to the Z direction extends from the rear to the front of the paper. The relationship between the X direction, the Y direction, and the Z direction, and the front-rear direction, the left-right direction, and the upward-downward direction of the battery pack 10, however, are not limited to this example.

In the embodiment, the front-rear direction, the left-right direction, and the upward-downward direction of the battery pack 10 are determined by the automobile on which the battery pack 10 is mounted. The X direction, the Y direction, and the Z direction indicate the front-rear direction, the left-right direction, and the upward-downward direction of the automobile, respectively. The arrow pointing in the X direction, the arrow pointing in the Y direction, and the arrow pointing in the Z direction indicate the front direction, the left direction, and the upward direction of the automobile, respectively. The relationship between the front-back direction, the left-right direction, and the upward-downward direction of the battery pack 10, and the front-back direction, the left-right direction, and the upward-downward direction of the automobile, however, are not limited to this example.

Hereinafter, a direction perpendicular to the Z direction is referred to as a horizontal direction according to necessity.

The battery pack 10 includes four battery modules 100 and a housing body 200. The four battery modules 100 include a pair of the left battery modules 100 arranged in the X direction and a pair of the right battery modules 100 arranged in the X direction. The housing body 200 includes a lower case 210 and an upper case 220. The lower case 210 may also be generally referred to as a tray or a main body portion, for example. The lower case 210 includes a lower plate 212 and a side frame 214. The upper case 220 may also be generally referred to as a cover or a lid portion, for example. As described later, each of the battery modules 100 includes a plurality of battery cells 102.

A pair of the terminals 104 is provided in front of the side frame 214. The pair of the terminals 104 are arranged substantially parallel in the Y direction. The front end portion of each of the terminals 104 protrudes forward from the front surface of the side frame 214. In an electric path, the four battery modules 100 are connected in series between a pair of the terminals 104.

The lower case 210 and the upper case 220 are attached to each other via a sealing material 230. The lower case 210, the upper case 220, and the sealing material 230 form a housing space 250. The housing space 250 houses the four battery modules 100.

The lower plate 212 defines a bottom portion of the housing space 250. The side frame 214 defines a side portion of the housing space 250. Specifically, the side frame 214 is provided along the outermost circumference of the lower plate 212 when viewed from the Z direction. The upper case 220 defines a top portion of the housing space 250.

The sealing material 230 is an elastic material such as rubber, for example. The sealing material 230 is provided over the entire circumference of the side frame 214 when viewed from the Z direction. Thus, the sealing material 230 surrounds the housing space 250 when viewed from the Z direction. As a result, the housing space 250 can be sealed from a space outside the housing body 200 by the sealing material 230.

The number and arrangement of the battery modules 100 are not limited to the example according to the embodiment. For example, the number of the battery modules 100 may be only two, only three, or five or more.

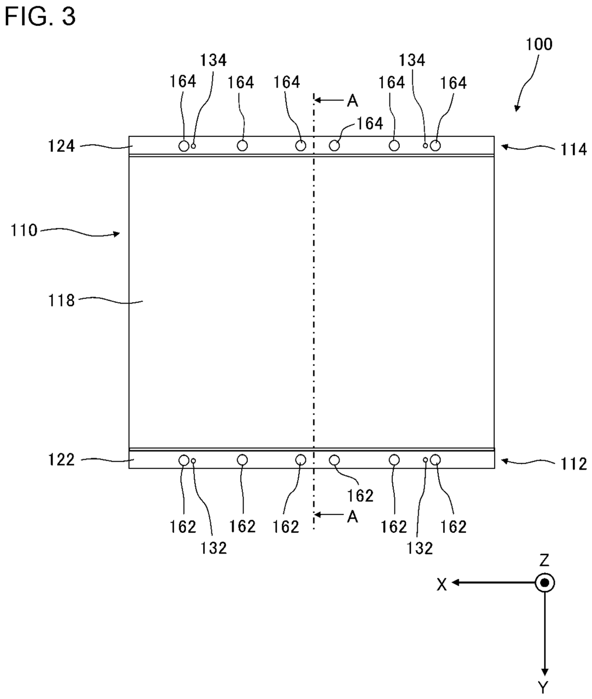

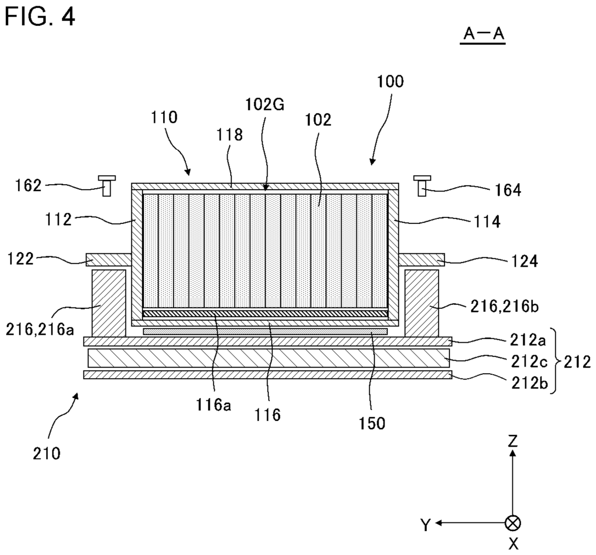

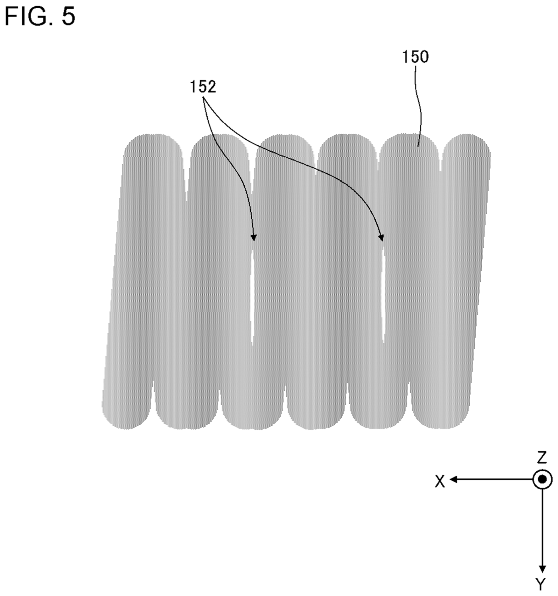

Fig. 3 is a plan view of the battery module 100 according to the embodiment. Fig. 4 is an A-A cross-sectional view of Fig. 3. Fig. 5 is a plan view of a filler 150 according to the embodiment. In Fig. 4, the white circle with the X indicating the X direction indicates that the arrow pointing in the X direction extends from the front to the rear of the paper.

As illustrated in Fig. 4, the battery module 100 includes a cell stack 102G and a housing case 110.

The cell stack 102G includes a plurality of the battery cells 102. In the example illustrated in Fig. 4, a plurality of the battery cells 102 is stacked substantially parallel in the Y direction. In the cell stack 102G, for example, a plurality of battery cell groups including a plurality of the battery cells 102 connected in parallel is connected in series. Alternatively, a plurality of the single battery cells 102 may be connected in series.

The housing case 110 houses the cell stack 102G. The housing case 110 includes a left cover 112, a right cover 114, a lower cover 116, an upper cover 118, a non-illustrated front cover, and a non-illustrated rear cover. The left cover 112 covers the left side of the cell stack 102G. The right cover 114 covers the right side of the cell stack 102G. The lower cover 116 covers the lower surface of the cell stack 102G via a thermally conductive adhesive 116a. The upper cover 118 covers the upper surface of the cell stack 102G. The non-illustrated front cover covers the front surface of the cell stack 102G. The non-illustrated rear cover covers the rear surface of the cell stack 102G.

The lower plate 212 includes an upper cooling plate 212a and a lower cooling plate 212b. The upper cooling plate 212a and the lower cooling plate 212b are made of metal, for example. Specifically, the upper cooling plate 212a and the lower cooling plate 212b include aluminum as a main component, for example. The upper cooling plate 212a and the lower cooling plate 212b overlap in the Z direction. A refrigerant 212c flows in a region between the lower surface of the upper cooling plate 212a and the upper surface of the lower cooling plate 212b. The refrigerant 212c is a liquid such as water, for example.

The lower case 210 includes a support frame 216. When viewed from the Z direction, the support frame 216 is a surrounding body surrounding at least a portion of the cell stack 102G. The support frame 216 is provided on the upper surface of the upper cooling plate 212a. Hereinafter, according to necessity, a portion of the support frame 216 located on the left side of the cell stack 102G is referred to as a left support portion 216a. Hereinafter, according to necessity, a portion of the support frame 216 located on the right side of the cell stack 102G is referred to as a right support portion 216b.

A left protrusion 122 is provided on the left outer surface of the left cover 112. The left protrusion 122 protrudes toward the left side of the left cover 112. The left protrusion 122 is arranged on the upper surface of the left support portion 216a. The left protrusion 122 and the left support portion 216a are fastened to each other by a plurality of left bolts 162. As illustrated in Fig. 3, a plurality of the left bolts 162 is arranged substantially parallel in the X direction. The number and arrangement of the left bolts 162, however, are not limited to the example illustrated in Fig. 3. For example, the left protrusion 122 and the left support portion 216a may be fastened to each other by only the single left bolt 162.

A right protrusion 124 is provided on the right outer surface of the right cover 114. The right protrusion 124 protrudes toward the right side of the right cover 114. The right protrusion 124 is arranged on the upper surface of the right support portion 216b. The right protrusion 124 and the right support portion 216b are fastened to each other by a plurality of right bolts 164. As illustrated in Fig. 3, a plurality of the right bolts 164 is arranged substantially parallel in the X direction. The number and arrangement of the right bolts 164, however, are not limited to the example illustrated in Fig. 3. For example, the right protrusion 124 and the right support portion 216b may be fastened to each other by only the single right bolt 164.

The battery module 100 is mounted on the lower plate 212 via a filler 150. The filler 150 is arranged between the lower surface of the lower cover 116 and the upper surface of the upper cooling plate 212a. The filler 150 is compressed in the Z direction by the lower surface of the lower cover 116 and the upper surface of the upper cooling plate 212a.

In the embodiment, the filler 150 is a thermally conductive adhesive. Examples of the filler 150 include a modified silicone application filler, a urethane application filler, an acrylic application filler, and the like. As a result, the lower surface of the lower cover 116 and the upper surface of the upper cooling plate 212a are physically joined via the filler 150. For this reason, the lower cover 116 and the upper cooling plate 212a can be less likely to displaced from each other as compared to the case where the filler 150 is not provided. Furthermore, the lower surface of the lower cover 116 and the upper surface of the upper cooling plate 212a are thermally coupled via the filler 150. For this reason, the heat generated in the battery module 100 can be easily dissipated to the lower case 210 via the thermally conductive adhesive 116a, the lower cover 116, and the filler 150 as compared to the case where the filler 150 is not provided.

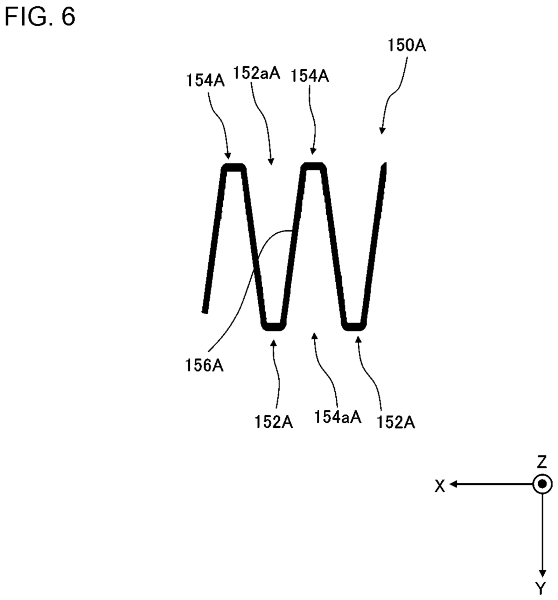

As illustrated in Fig. 5, when viewed from the Z direction, the pattern of the filler 150 is formed by compressing a filler in the Z direction with the filler applied in a substantially zigzag pattern, such as a substantially zigzag pattern illustrated in Figs. 6 to 8 described later, and spreading the filler in the horizontal direction. The filler applied in the substantially zigzag pattern is compressed in the Z direction by the lower surface of the lower cover 116 and the upper surface of the upper cooling plate 212a.

As illustrated in Fig. 5, the filler 150 may have at least one uncovered region 152. The filler 150 is not present in the uncovered region 152. When viewed from the Z direction, the entire circumference of the uncovered region 152 is surrounded by the filler 150. The uncovered region 152 is formed as air is surrounded by the filler spreading in the horizontal direction due to compression in the Z direction. The area of the uncovered region 152 is desirably as small as possible. The increase in the area of the uncovered region 152 can cause deterioration in performance of the battery pack 10, such as deterioration in joining between the lower surface of the lower cover 116 and the upper surface of the upper cooling plate 212a, or deterioration in thermal conduction between the lower surface of the lower cover 116 and the upper cooling plate 212a. In the embodiment, however, the area of the uncovered region 152 relative to the entire area of the filler 150 can be relatively small when viewed from the Z direction. Specifically, when viewed from the Z direction, the area of the uncovered region 152 is less than 30%, preferably equal to or less than 20%, more preferably equal to or less than 15%, and even more preferably equal to or less than 10% of the entire area of the filler 150. The lower limit of the area of the uncovered region 152 is not particularly limited, but is most preferably zero.

Fig. 6 is a view for describing a first example of a method of forming the filler 150 according to the embodiment. In the first example, the filler 150 is formed as follows.

First, the applied filler 150A is applied onto the upper surface of the upper cooling plate 212a from a non-illustrated nozzle. When viewed from the Z direction, the applied filler 150A has a substantially zigzag pattern. In the embodiment, the applied filler 150A is folded alternately between a region on one side in the Y direction with respect to the center of the cell stack 102G in the Y direction and a region on another side in the Y direction with respect to the center of the cell stack 102G in the Y direction. The folded shape of the applied filler 150A, however, may be determined regardless of the stack direction of a plurality of the battery cells 102.

In the example illustrated in Fig. 6, the pattern of the applied filler 150A includes a plurality of left folded portions 152A, a plurality of right folded portions 154A, and a plurality of extension portions 156A. The plurality of left folded portions 152A and the plurality of right folded portions 154A are arranged alternately. In the example illustrated in Fig. 6, each of the left folded portions 152A extends substantially parallel to the X direction. Accordingly, the battery cell 102 located on the leftmost side of the cell stack 102G and the left folded portion 152A can be easily overlapped in the Z direction as compared to the case where each of the left folded portions 152A extends diagonally to the X direction. In the example illustrated in Fig. 6, therefore, the battery cell 102 located on the leftmost side of the cell stack 102G can be easily cooled as compared to the case where each of the left folded portions 152A extends diagonally to the X direction. Each of the left folded portions 152A, however, may extend diagonally to the X direction. The same is true for the right folded portion 154A. In the example illustrated in Fig. 6, each of the extension portions 156A extends in a substantially straight shape between each of the left folded portions 152A and each of the right folded portions 154A. Specifically, when viewed from the Z direction, each of the extension portions 156A is diagonal to the Y direction.

In the embodiment, the applied filler 150A can be applied continuously along a substantially zigzag pattern. For example, applying the applied filler 150A in a stripe pattern needs pausing application of the applied filler 150A while moving a nozzle between different lines of the stripe pattern. The embodiment, in contrast, does not need pausing application of the applied filler 150A. In the embodiment, therefore, the tact time for applying the applied filler 150A can be shortened as compared to the case where the applied filler 150A is applied in the stripe pattern.

Furthermore, in the embodiment, the amount of the applied filler 150A can be easily uniform over the entire substantially zigzag pattern as compared to the case where the applied filler 150A is applied in the stripe pattern. Specifically, a larger amount of the applied filler 150A is easily ejected from the nozzle immediately after start of ejection of the applied filler 150A and immediately before end of ejection of the applied filler 150A than in another period. As described above, applying the applied filler 150A in the stripe pattern needs pausing the application of applied filler 150A while moving the nozzle between different lines of the stripe pattern. As a result, the amount of the applied filler 150A on the opposite ends of each line of the stripe pattern is likely to become larger than the amount of the applied filler 150A between the opposite ends of each line of the stripe pattern. As described above, the embodiment, in contrast, does not need pausing the application of the applied filler 150A. Accordingly, the amount of the applied filler 150A in the embodiment can be easily uniform over the entire zigzag pattern as compared to the case where the applied filler 150A is applied in the stripe pattern.

Next, the battery module 100 is mounted on the upper surface of the upper cooling plate 212a via the applied filler 150A. Next, the left protrusion 122 and the left support portion 216a are fastened to each other by the left bolt 162. Similarly, the right protrusion 124 and the right support portion 216b are fastened to each other by the right bolt 164. Thus, the applied filler 150A is compressed in the Z direction by the lower surface of c and the upper surface of the upper cooling plate 212a. For this reason, the applied filler 150A spreads in the horizontal direction.

As illustrated in Fig. 6, when viewed from the Z direction, the pattern of the applied filler 150A defines a plurality of right openings 152aA and a plurality of left openings 154aA. Each of the right openings 152aA is located between the right folded portions 154A adjacent in the X direction. Each of the left opening 154aA is located between the left folded portions 152A adjacent in the X direction.

When the applied filler 150A spreads in the horizontal direction due to compression in the Z direction, each of the left folded portions 152A and a portion of each of the extension portions 156A around each of the left folded portions 152A spread mainly toward the right opening 152aA. Each of the right folded portions 154A and a portion of each of the extension portions 156A around each of the right folded portions 154A, on the other hand, spread mainly toward the left opening 154aA. In the embodiment, therefore, there can be a less possibility that air is surrounded by the applied filler 150A spreading in the horizontal direction as compared to the case where the pattern of the applied filler 150A is closed without being opened at the right opening 152aA and the left opening 154aA. In the embodiment, accordingly, the area of the uncovered region 152 can be small or zero as compared to the case where the pattern of the applied filler 150A is closed without being opened at the right opening 152aA and the left opening 154aA.

The interval in the X direction between the extension portions 156A adjacent in the X direction via the left folded portion 152A increases from the left folded portion 152A toward the right folded portion 154A. Similarly, the interval in the X direction between the extension portions 156A adjacent in the X direction via the right folded portion 154A increase from the right folded portion 154A toward the left folded portion 152A. In other words, when viewed from the Z direction, the angle between the left folded portion 152A and the extension portion 156A is greater than 90°. The same is true for the angle between the right folded portion 154A and the extension portion 156A.

In one example, when viewed from the Z direction, the angle between the left folded portion 152A and the extension portion 156A is greater than 90°, and preferably equal to or greater than 92°. The same is true for the angle between the right folded portion 154A and the extension portion 156A. In this case, the filler expanding from the left folded portion 152A and the right folded portion 154A can be less likely to surround air between the extension portions 156A adjacent in the X direction as compared to the case where the angle between the left folded portion 152A and the extension portion 156A and the angle between the right folded portion 154A and the extension portion 156A are equal to or less than 90°.

In one example, when viewed from the Z direction, the angle between the left folded portion 152A and the extension portion 156A is equal to or less than 110°, and preferably equal to or less than 100°. The same is true for the angle between the right folded portion 154A and the extension portion 156A. In this case, the filler can easily spread entirely between extension portions 156A adjacent in the X direction as compared to the case where the angle between the left folded portion 152A and the extension portion 156A and the angle between the right folded portion 154A and the extension portion 156A are greater than the upper limit value described above.

The cell stack 102G is used in a vehicle such as an automobile and has a relatively high weight. As a result, the lower cover 116 may flex convexly toward the upper cooling plate 212a due to weight of the cell stack 102G. The increasing in the thickness of the lower cover 116 in the Z direction for reducing flexing of the lower cover 116 leads to a weight increase of the battery pack 10. As a result, certain flexing of the lower cover 116 is acceptable, rather than increasing the thickness of the lower cover 116 in the Z direction. The maximum value of flexing of the lower cover 116 is equal to or greater than 0.1 mm and equal to or less than 1.0 mm, for example. When the maximum value of flexing of the lower cover 116 is within this range, the thickness of the applied filler 150A can be easily uniform by adjusting a condition such as a material, thickness, and a method of fixing the upper cooling plate 212a according to weight and a size of the battery module 100. When the lower cover 116 flexes, the upper cooling plate 212a may also flex in the same way as the lower cover 116. When both the lower cover 116 and the upper cooling plate 212a flex in substantially the same shape, thickness of the filler 150 between the lower cover 116 and the upper cooling plate 212a can be easily uniform.

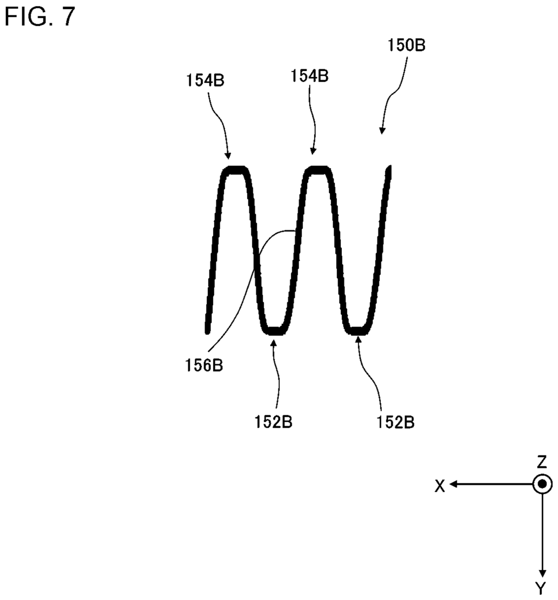

Fig. 7 is a view for describing a second example of a method of forming the filler 150 according to the embodiment. The second example described by using Fig. 7 is similar to the first example described by using Fig. 6, except for the following point.

When viewed from the Z direction, the pattern of the applied filler 150B illustrated in Fig. 7 has a plurality of left folded portions 152B, a plurality of right folded portions 154B, and a plurality of extension portions 156B. As illustrated in Fig. 7, when viewed from the Z direction, each of the extension portions 156B may be curved between each of the left folded portions 152B and each of the right folded portions 154B.

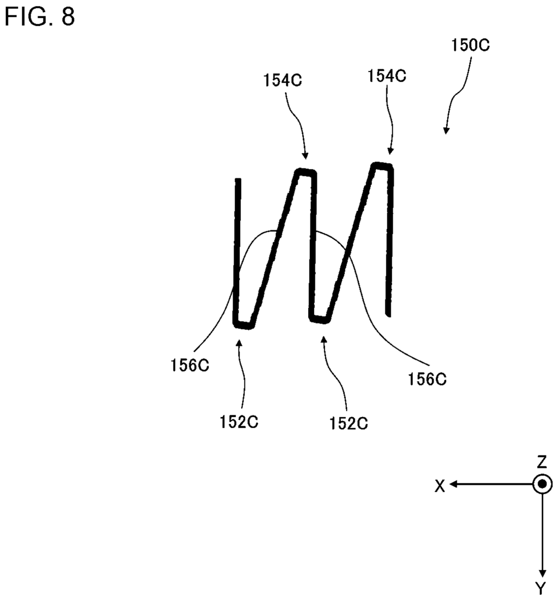

Fig. 8 is a view for describing a third example of a method of forming the filler 150 according to the embodiment. The third example described by using Fig. 8 is similar to the first example described by using Fig. 6, except for the following point.

When viewed from the Z direction, the pattern of the applied filler 150C illustrated in Fig. 8 includes a plurality of left folded portions 152C, a plurality of right folded portions 154C, and a plurality of extension portions 156C. As illustrated in Fig. 8, when viewed from the Z direction, the extension portion 156C extending from the left folded portion 152C toward the right folded portion 154C may be substantially parallel to the Y direction. In the example illustrated in Fig. 8, when viewed from the Z direction, the right folded portion 154C extending from the right folded portion 154C toward the left folded portion 152C is diagonal to the Y direction.

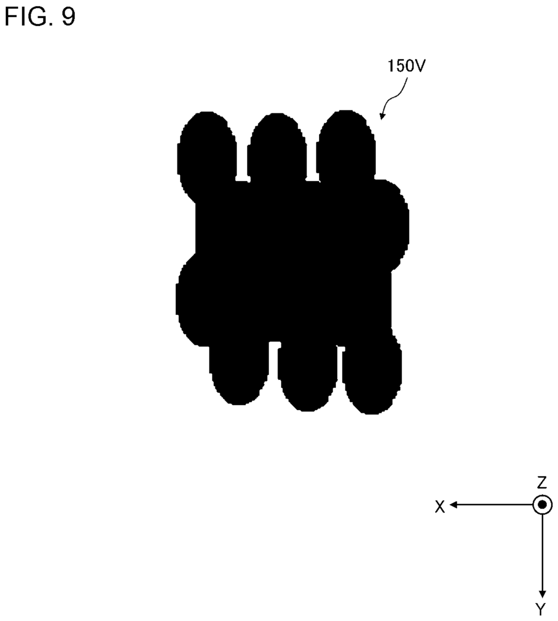

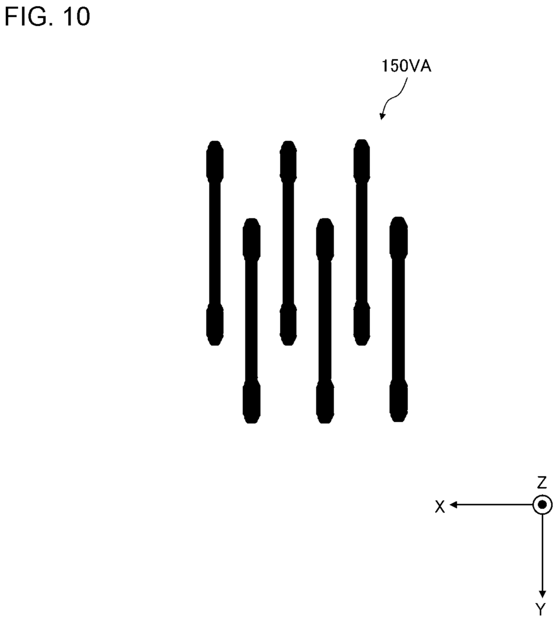

Fig. 9 is a plan view of a filler 150V according to a variant. Fig. 10 is a view for describing one example of a method of forming the filler 150V according to the variant.

As in the embodiment, the pattern of the filler 150V is formed by compressing a filler in the Z direction with the filler applied in a deformed stripe pattern exemplified by Fig. 10, and spreading the filler in the horizontal direction.

In the example illustrated in Fig. 10, a plurality of substantial line patterns formed by an applied filler 150VA is arranged at substantially equal intervals substantially in a direction with respect to the X direction. Each line pattern extends substantially parallel to the Y direction. The length of each line pattern in the Y direction is substantially equal. The Y directional centers of the line patterns adjacent in the X direction are displaced from each other in the Y direction. As a result, the ends of the line patterns adjacent in the X direction are displaced from each other in the Y direction on opposite sides in the Y direction. The width in the X direction of the end portions of each line pattern on opposite sides in the Y direction is greater than the width in the X direction of a portion between the end portions of each line pattern on opposite sides in the Y direction. This is because, as described above, when each line pattern is formed by ejecting the applied filler 150VA from a non-illustrated nozzle, a larger amount of the applied filler 150VA is easily ejected immediately after start of ejection of the applied filler 150VA and immediately before end of ejection of the applied filler 150VA than in another period. As a result, the thickness in the Z direction of the end portions of each line pattern on opposite sides in the Y direction may be thicker than thickness in the Z direction of a portion between the end portions of each line pattern on opposite sides in the Y direction.

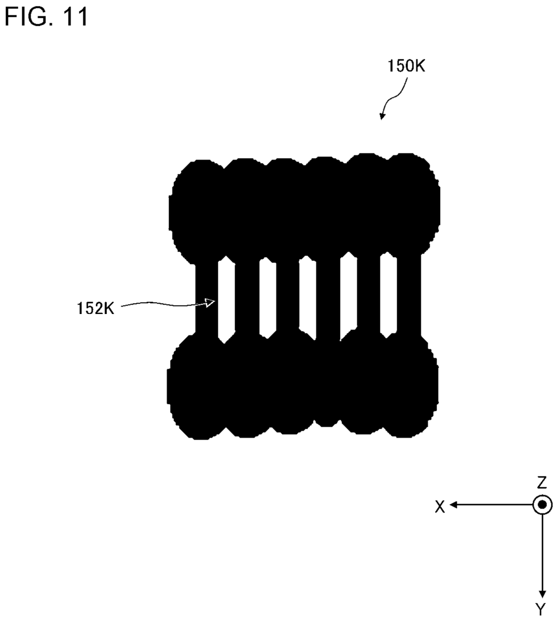

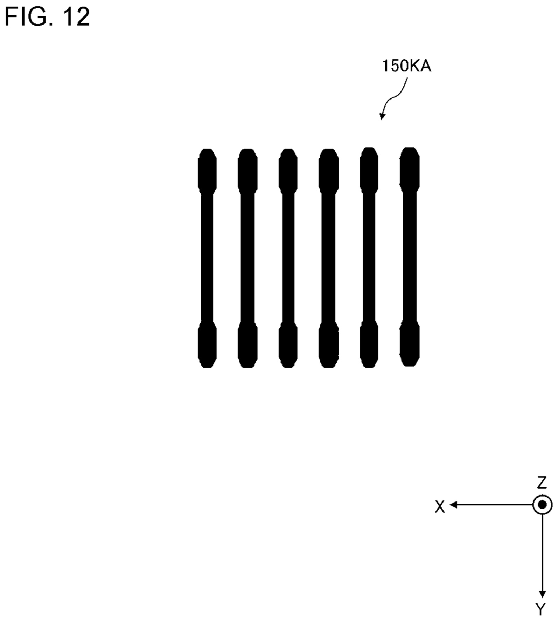

Fig. 11 is a plan view of a filler 150K according to a comparative example. Fig. 12 is a view for describing one example of a method of forming the filler 150K according to the comparative example. The comparative example is similar to the variant, except for the following point.

As illustrated in Fig. 12, an applied filler 150KA is formed in a simple stripe pattern. The Y directional centers of the line patterns adjacent in the X direction are aligned with each other in the Y direction. As a result, the ends of the line patterns adjacent in the X direction on opposite sides in the Y direction are aligned with each other in the Y direction.

The variant and the comparative example are compared.

In the comparative example, when the applied filler 150KA is compressed in the Z direction, the filler at the end portions of each line pattern on opposite sides in the Y direction more easily spreads to the horizontal direction than the filler between the end portions of each line pattern on opposite sides in the Y direction. This is because, as described above, the amount of the filler per unit area at the end portions of each line pattern on opposite sides in the Y direction is greater than the amount of the filler per unit area between the end portions of each line pattern on opposite sides in the Y direction. In the comparative example, therefore, as illustrated in Fig. 11, the filler spreading from the Y directional opposite end portions of each line pattern to the horizontal direction is likely to surround air between line patterns adjacent in the X direction, and an uncovered region 152K is likely to be formed.

In the variant, in contrast, as illustrated in Fig. 10, the end portions of the line patterns adjacent in the X direction on opposite sides in the Y direction are displaced in the Y direction. As a result, even if the filler spreads from the Y directional opposite end portions of each line pattern to the horizontal direction, the filler spreading from the Y directional opposite end portions of each line pattern to the horizontal direction is less likely to surround air between line patterns adjacent in the X direction in the variant than in the comparative example. In the variant, therefore, an uncovered region can be reduced more than in the comparative example.

In the variant, as illustrated in Fig. 10, the ends of the line patterns adjacent in the X direction are displaced from each other in the Y direction on opposite sides in the Y direction. The ends of the line patterns adjacent in the X direction may be, however, displaced from each other in the Y direction on only one side of opposite sides in the Y direction. In this example, the ends of the line patterns adjacent in the X direction may be aligned with each other in the Y direction on the other side of opposite sides in the Y direction. In this example, an uncovered region can be also reduced more than in the comparative example.

The embodiment and the variant according to the present invention have been described above with reference to the drawings, but these are exemplifications of the present invention, and various configurations other than those described above can also be adopted.

For example, an applied filler may be formed in a part of a region by the method described in the embodiment, and may be formed in another part of the region by the method described in the variant.

### EXAMPLES

One aspect of the present invention is described based on Example 1 and Comparative Example 1. The present invention is not limited to Example 1 below.

### (Example 1)

An applied filler of modified silicone was applied onto a plate from a nozzle. The applied filler was in a substantially zigzag pattern as in the example described by using Fig. 6. The length of each folded portion of the pattern of the applied filler was 25 mm. The length of each extension portion of the applied filler was 300 mm. The angle between each extension portion and each folded portion was 93°. The pattern of the applied filler was folded 10 times on the left side and 10 times on the right side.

Next, the applied filler was compressed in a direction perpendicular to the plate. As described by using Fig. 5, the filler spreads in a horizontal direction due to the compression of the applied filler. The area of an uncovered region described in the embodiment was 10% of the entire area of the filler.

### (Comparative Example 1)

Comparative Example 1 was similar to Example 1, except for the following point.

An applied filler was in a simple stripe pattern. A plurality of line patterns included in the stripe pattern extended parallel to the arrangement direction of a plurality of extension portions of a substantially zigzag pattern in Example 1. The pitch of the plurality of line patterns was 30 mm. The length of each line pattern was 30350 mm.

Next, the applied filler was compressed in a direction perpendicular to a plate. As described by using Fig. 11, the filler spreads in a horizontal direction due to the compression of the applied filler. The area of an uncovered region described in the embodiment was 30% of the entire area of the filler.

From the comparison between Example 1 and Comparative Example 1, the area of the uncovered region of the filler can be smaller when the applied filler is formed in the substantially zigzag pattern than when the applied filler is formed in the simple stripe pattern.

This application claims priority based on Japanese patent application No. 2023-009523, filed on January 25, 2023, the disclosure of which is incorporated herein in its entirety by reference.

### REFERENCE SIGNS LIST

10 Battery pack, 100 Battery module, 102 Battery cell, 102G Cell stack, 104 Terminal, 110 Housing case, 112 Left cover, 114 Right cover, 116 Lower cover, 116a Thermally conductive adhesive, 118 Upper cover, 122 Left protrusion, 124 Right protrusion, 150, 150K, 150V Filler, 150A, 150B, 150C, 150KA, 150VA Applied filler, 152, 152K Uncovered region, 152A, 152B, 152C Left folded portion, 152aA Right opening, 154A, 154B, 154C Right folded portion, 154aA Left opening, 156A, 156B, 156C Extension portion, 162 Left bolt, 164 Right bolt, 200 Housing body, 210 Lower case, 212 Lower plate, 212a Upper cooling plate, 212b Lower cooling plate, 212c Refrigerant, 214 Side frame, 216 Support frame, 216a Left support portion, 216b Right support portion, 220 Upper case 230 Sealing material, 250 Housing space

## Claims

1. A method of manufacturing a battery pack comprising:
a step of applying a filler onto at least a portion of a housing body; and
a step of mounting a battery module on the at least a portion of the housing body via the filler, wherein,
in the step of applying the filler, the filler has at least one of a pattern including a plurality of folded portions arranged alternately, and a plurality of patterns arranged in a predetermined direction and including adjacent patterns having displaced ends on at least one of opposite sides.

2. A battery pack comprising:
a housing body; and
a battery module mounted on at least a portion of the housing body via a filler, wherein
an area of a region of which an entire circumference is surrounded by the filler is less than 30% of an entire area of the filler.
